# FASCICULE DE BREVET EUROPEEN

(11) **EP 1 533 947 B1**
(45) Date de publication et mention de la délivrance du brevet: **26.06.2013**
(21) Numéro de dépôt: 04292614.7
(22) Date de dépôt: 04.11.2004
(51) Int. Cl.: H04L 12/413

(54) **Dispositif de liaison unidirectionnelle dans un reseau ethernet**
Vorrichtung zur unidirektionalen Verbindung in einem Ethernet-Netzwerk
Apparatus for unidirectinal connection in an Ethernet network

(30) Priorité: 18.11.2003 FR 0313462; 02.07.2004 FR 0407347
(43) Date de publication de la demande: 25.05.2005
(73) Titulaire: Sagem Défense Sécurité, 75015 Paris (FR)
(72) Inventeur: Courteille, Jean-Marie, 91120 Palaiseau (FR); Sorel, Hervé, 78350 Jouy en Josas (FR)
(74) Mandataire: Lavialle, Bruno François Stéphane

(56) Documents cités:
- EP-A- 1 164 766
- US-A- 5 311 114
- US-A- 5 608 729
- US-A1- 2003 182 580

## Description

La présente invention concerne un dispositif de liaison unidirectionnelle utilisable dans un réseau ETHERNET.

### ARRIERE PLAN DE L'INVENTION

Il est connu pour relier un premier ordinateur et un deuxième ordinateur l'un à l'autre d'associer à ces ordinateurs une première interface ETHERNET et une deuxième interface ETHERNET qui comprennent chacune un module de transmission - réception, couramment appelé transceiver (ou transcepteur), pourvu de bornes de transmission externe de message et de bornes de réception externe de message. Une liaison est établie entre les deux interfaces au moyen d'un câble disposé entre les bornes de transmission externe du transceiver de la première interface et les bornes de réception externe du transceiver de la deuxième interface, et d'un câble disposé entre les bornes de réception externe du transceiver de la première interface et les bornes de transmission externe du transceiver de la deuxième interface. Les réseaux ETHERNET sont particulièrement fiables et permettent des débits relativement élevés.

Il peut arriver que l'on souhaite restreindre le passage d'informations du deuxième ordinateur vers le premier ordinateur afin d'éviter par exemple qu'un utilisateur du deuxième ordinateur puisse accéder à des informations du premier ordinateur, provoque des dysfonctionnements du premier ordinateur ou prenne le contrôle de celui-ci. Tel est le cas par exemple lorsque le premier ordinateur fait partie d'un réseau fortement sécurisé tandis que le deuxième ordinateur fait partie d'un réseau faiblement sécurisé.

Il existe des logiciels de filtrage qui pourraient réaliser cette restriction du passage d'informations. Cependant, il arrive que de tels logiciels présentent des faiblesses telles que des canaux ou portes cachés qui peuvent être exploités pour en corrompre le fonctionnement.

Il est connu également de raccorder le premier ordinateur et le deuxième ordinateur à un dispositif de protection de type "firewall" assurant un filtrage des messages transitant par lui entre les deux ordinateurs. Un tel dispositif n'assure qu'une relative sécurité et il existe un risque que des messages non autorisés puissent transiter du deuxième ordinateur vers le premier ordinateur malgré le dispositif de protection. Il existe par exemple des logiciels qui permettent d'inverser les fonctions des bornes de transmission et des bornes de réception sans que le dispositif de protection puisse le détecter. Ces dispositifs sont en outre relativement complexes à mettre en oeuvre.

Il est par ailleurs connu du document EP-A-1 164 766 un dispositif de liaison d'un premier réseau à un second réseau, comportant un organe de commutation agencé pour sélectivement autoriser la transmission du premier réseau vers le second réseau ou inversement.

On aurait pu penser à interrompre de la même manière la liaison transmettant les messages du deuxième ordinateur vers le premier ordinateur dans le cas d'un réseau ETHERNET. Toutefois, dans un réseau ETHERNET, les interfaces ETHERNET vérifient la présence d'un signal d'intégrité de ligne (ou signal de présence) aux bornes de réception externe du transceiver avant d'émettre un message. La suppression de la liaison permettant la transmission de message du deuxième ordinateur vers le premier ordinateur empêche la vérification de l'existence de ce signal. L'organe de commutation du document précité est donc inutilisable dans un tel réseau à moins de modifier la structure de l'interface ETHERNET et le logiciel assurant son fonctionnement pour autoriser le premier ordinateur à émettre son message quand bien même le signal d'intégrité de ligne n'est pas détecté. Ces modifications sont relativement lourdes et risquent d'affecter la fiabilité de la liaison ETHERNET.

### OBJET DE L'INVENTION

Un but de l'invention est de proposer une liaison unidirectionnelle entre deux interfaces ETHERNET qui soit simple et fiable.

### BREF EXPOSE DE L'INVENTION

A cet effet, on prévoit, selon l'invention, un dispositif de liaison unidirectionnelle entre au moins une première interface ETHERNET et une deuxième interface ETHERNET qui comprennent respectivement un premier transceiver et un deuxième transceiver pourvus chacun de bornes de transmission externe de message et de bornes de réception externe de message, le dispositif comprenant un organe de liaison des bornes de transmission externe du premier transceiver aux bornes de réception externe du deuxième transceiver et un organe d'émission d'un signal d'intégrité de ligne connecté aux bornes de réception externe du premier transceiver, les bornes de transmission externe du deuxième transceiver étant maintenues déconnectées des bornes de réception externe du premier transceiver.

Ainsi, un signal d'intégrité de ligne est transmis à la première interface ETHERNET de sorte que l'absence de liaison entre les bornes de transmission externe du deuxième transceiver et les bornes de réception externe du premier transceiver n'affecte pas le fonctionnement de la première interface ETHERNET. Cette absence de liaison permet de limiter le risque que des informations non autorisées transitent de la deuxième interface ETHERNET vers la première interface ETHERNET.

Selon un premier mode réalisation, l'organe de liaison comprend au moins un amplificateur analogique raccordé au premier transceiver et au deuxième transceiver pour amplifier le message provenant du premier transceiver en direction du deuxième transceiver.

L'amplificateur empêche que la liaison normalement utilisée pour transmettre les messages du premier transceiver au deuxième transceiver ne soit utilisée pour le transit d'informations provenant du deuxième transceiver vers le premier transceiver.

De préférence alors, l'organe d'émission comprend une dérivation raccordant une sortie de l'amplificateur analogique aux bornes de réception externe du premier transceiver.

Le signal d'intégrité de ligne issu des bornes de transmission externe du premier transceiver est alors retourné à ses bornes de réception externe. L'organe d'émission est alors de structure particulièrement simple.

En variante, l'organe d'émission comprend un transceiver ayant des bornes de transmission externe reliés aux bornes de réception externe du premier transceiver.

Le transceiver de l'organe d'émission n'est alors utilisé que pour émettre le signal d'intégrité de ligne vers le premier transceiver de la première interface ETHERNET. Un tel composant est relativement peu coûteux et habituel dans le domaine des réseaux ETHERNET, ce qui facilite sa mise en oeuvre.

Selon un deuxième mode de réalisation particulier, le dispositif comprend un troisième transceiver ayant des bornes de transmission externe et des bornes de réception externe respectivement reliées aux bornes de réception externe et aux bornes de transmission externe du premier transceiver, un quatrième transceiver ayant des bornes de transmission externe et des bornes de réception externe respectivement reliées aux bornes de réception externe et aux bornes de transmission externe du deuxième transceiver, le troisième transceiver ayant des bornes de transmission interne reliées à des bornes de réception interne du quatrième transceiver par l'intermédiaire d'une mémoire tampon et des bornes de réception interne maintenues déconnectées de bornes de transmission interne du quatrième transceiver.

Le troisième transceiver assure l'émission du signal d'intégrité de ligne en direction du premier transceiver. La mémoire tampon permet d'adapter le débit des bornes de transmission interne du troisième transceiver au débit des bornes de réception interne du quatrième transceiver et permet en outre une répétition du message. La mémoire tampon permet de s'affranchir des problèmes de désynchronisation entre l'horloge du troisième transceiver et l'horloge du quatrième transceiver. Les liaisons entre le troisième transceiver et le quatrième transceiver et la mémoire tampon sont en général formées de bus de type xMII qui sont unidirectionnels par conception. Ces liaisons ne peuvent donc être utilisées pour transmettre des messages du deuxième ordinateur vers le premier ordinateur.

Avantageusement, la première interface étant associée à un premier équipement comprenant un port d'entrée de signaux discrets et la deuxième interface étant associée à un deuxième équipement comprenant un port de sortie de signaux discrets, le dispositif comprend un organe de liaison raccordé à ces ports et pourvu d'un filtre passe-bas agencé de préférence pour laisser passer les signaux de fréquence inférieure à un hertz environ.

Il est ainsi possible de faire passer des accusés de réception ou des signaux de tests du deuxième équipement vers le premier équipement. Toutefois, le filtre passe-bas empêche le passage de signaux élaborés qui pourraient être utilisés pour provoquer un dysfonctionnement du premier équipement.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique d'un réseau dans lequel est implanté un dispositif conforme à l'invention,
- la figure 2 est une vue schématique d'un tel dispositif, selon un premier mode de réalisation,
- la figure 3 est une vue schématique d'une première variante de réalisation du dispositif conforme au premier mode de réalisation,
- la figure 4 est une vue schématique d'une deuxième variante de réalisation du dispositif conforme au premier mode de réalisation de l'invention,
- la figure 5 est une vue schématique d'une troisième variante de réalisation du dispositif conforme au premier mode de réalisation,
- la figure 6 est une vue schématique d'un tel dispositif, selon un deuxième mode de réalisation.

### DESCRIPTION DETAILLEE DE L'INVENTION

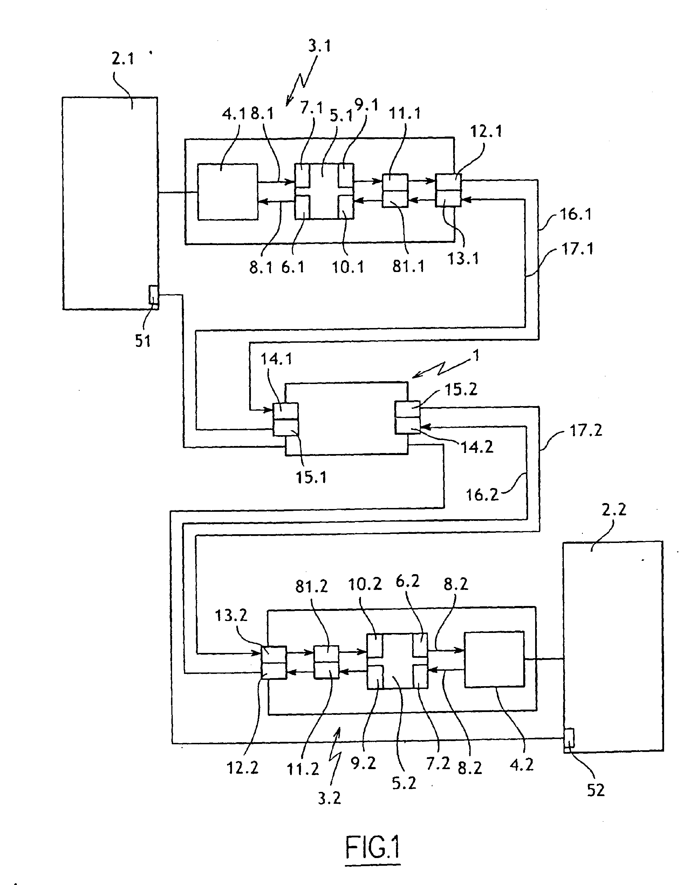

En référence à la figure 1, le dispositif de liaison unidirectionnelle conforme à l'invention est généralement désigné en 1.

Le dispositif de liaison unidirectionnelle 1 est disposé entre deux ordinateurs 2.1 et 2.2 (dans la suite de la description, les indices « .1 » et « .2 » désignent des éléments en relation avec les ordinateurs 2.1 et 2.2 respectivement). Les ordinateurs 2.1, 2.2 peuvent faire partie chacun d'un réseau.

Les ordinateurs 2.1 et 2.2 sont équipés chacun d'interfaces ETHERNET généralement désignées en 3.1 et 3.2.

L'interface ETHERNET 3.1 comprend de façon connue en elle-même un module de contrôle d'accès 4.1 couramment appelé MAC (abréviation de "Media Access Control") relié d'une part à l'ordinateur 2.1 et d'autre part à un transceiver 5.1. Le transceiver 5.1 comprend des bornes de transmission interne 6.1 de messages et des bornes de réception interne 7.1 de messages reliées par des bus xMII 8.1 au module de contrôle d'accès 4.1. Le transceiver 5.1 comporte également des bornes de transmission externe 9.1 reliées par l'intermédiaire d'un transformateur d'isolement 11.1 à un connecteur de sortie 12.1 et des bornes de réception externe 10.1 reliée par l'intermédiaire d'un transformateur d'isolement 81.1 à un connecteur d'entrée 13.1.

L'interface ETHERNET 3.2 a la même structure que celle de l'interface ETHERNET 3.1. La structure et le fonctionnement des interfaces ETHERNET 3 sont classiques. Les interfaces ETHERNET 3 permettent de faire transiter entre elles des messages. Les messages transitant par une liaison ETHERNET sont couramment appelés trames et comprennent notamment des informations d'adressage relatives à la source du message et au destinataire de celui-ci, des informations de contrôle (type de données, longueur du message...) et les données proprement dites.

Le dispositif de liaison 1 comprend des connecteurs d'entrée 14.1, 14.2 reliés respectivement aux connecteurs de sortie 12.1, 12.2 des interfaces ETHERNET 3.1, 3.2 par des paires de câbles torsadés 16.1, 16.2. Le dispositif de liaison 1 comprend également des connecteurs de sortie 15.1, 15.2 reliés respectivement aux connecteurs d'entrée 13.1, 13.2 des interfaces ETHERNET 3.1, 3.2 par des paires de câbles torsadés 17.1, 17.2.

Un premier mode de réalisation du dispositif de liaison 1 va maintenant être décrit.

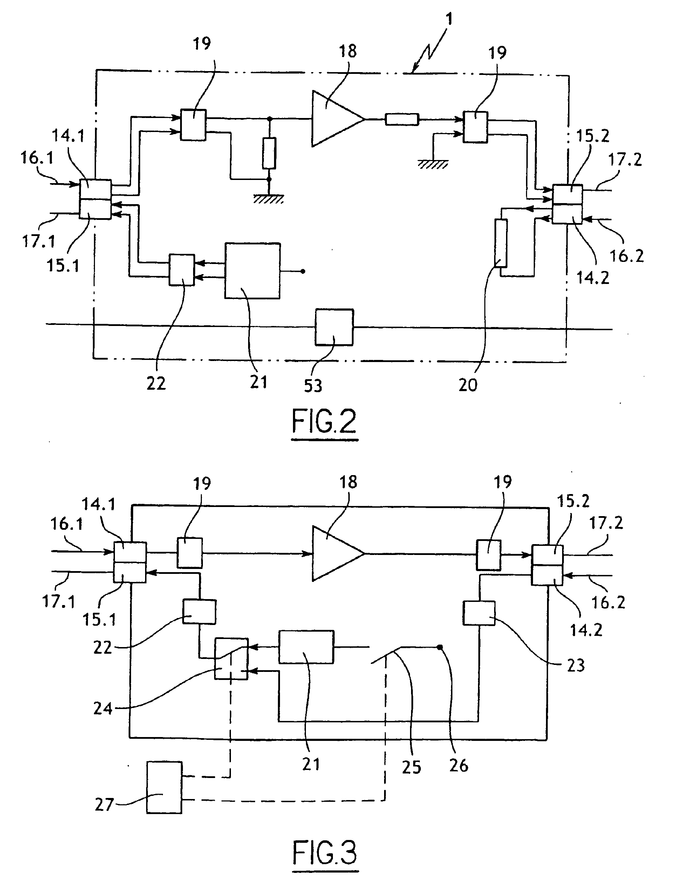

En référence plus particulièrement à la figure 2, le dispositif de liaison 1 comprend, conformément au premier mode de réalisation de l'invention, un amplificateur 18 analogique relié par l'intermédiaire de transformateurs d'isolement 19 d'une part au connecteur d'entrée 14.1 et d'autre part au connecteur de sortie 15.2 pour amplifier les messages provenant de l'ordinateur 2.1 à destination de l'ordinateur 2.2.

Le dispositif de liaison 1 comprend également une charge 20 raccordée au connecteur d'entrée 14.2 permettant de réaliser une adaptation d'impédance.

Le dispositif de liaison 1 comprend en outre une source de signal d'intégrité de ligne 21 raccordée par l'intermédiaire d'un transformateur d'isolement 22 au connecteur 15.1. La source de signal d'intégrité de ligne 21 fournit aux bornes de réception externe 10.1 du transceiver 5.1 un signal identique au signal d'intégrité de ligne ou signal de présence engendré normalement par les tranceivers. La source de signal d'intégrité de ligne 21 est ici un transceiver dont les bornes de transmission externe sont reliés au connecteur 15.1 via le transformateur 22.

Un message issu de l'ordinateur 2.1 est transmis dans l'interface ETHERNET 3.1 au module de contrôle d'accès 4.1 puis au transceiver 5.1. Après contrôle de la présence du signal d'intégrité de ligne aux bornes de réception externe 10.1, le message est transmis des bornes de transmission externe 9.1 vers le dispositif de liaison 1 où le message est amplifié par l'amplificateur 18 avant d'être transmis à l'interface ETHERNET 3.2 puis à l'ordinateur 2.2.

Il n'y a pas de liaison entre le connecteur d'entrée 14.2 et le connecteur de sortie 15.1 de sorte que les bornes de transmission externe 9.2 du transceiver 5.2 sont déconnectées des bornes de réception externe 10.1 du transceiver 5.1. Aucun message émis depuis les bornes de transmission externe 9.2 ne peut donc arriver aux bornes de réception externe 10.1.

L'amplificateur 18 interdit en outre que la liaison entre les bornes de transmission externe 9.1 du transceiver 5.1 et les bornes de réception externe 10.2 du transceiver 5.2 soit utilisée pour le passage d'un message de l'interface ETHERNET 3.2 vers l'interface ETHERNET 3.1.

Par ailleurs, l'ordinateur 2.1 comprend un port de réception 51 de signaux discrets et l'ordinateur 2.2 comprend un port d'émission 52 de signaux discrets.

Le dispositif de liaison 1 comprend un filtre passe-bas 53 relié au port d'émission 52 de l'ordinateur 2.2 et au port de réception 51 de l'ordinateur 2.1 pour laisser passer les signaux ayant une fréquence inférieure ou égale à un hertz. Ces signaux peuvent être utilisés pour tester la liaison unidirectionnelle et par exemple vérifier qu'un message envoyé par l'ordinateur 2.1 a bien été reçu par l'ordinateur 2.2. Le filtre passe-bas 53 empêche le passage de signaux évolués, qui auraient nécessairement une fréquence supérieure à un hertz, de sorte qu'il n'est pas possible à partir du deuxième ordinateur de contrôler ou engendrer des dysfonctionnements sur le premier ordinateur par cette liaison basse fréquence.

Selon une première variante, conforme à la figure 3 (le schéma de la figure 3 reprend de manière simplifiée une partie du schéma de la figure 2), le connecteur d'entrée 14.2 est raccordé par l'intermédiaire d'un transformateur d'isolement 23 à un commutateur 24 monté entre la source de signal d'intégrité de ligne 21 et le transformateur d'isolement 22. Le commutateur 24 possède un premier état dans lequel la source de tension 21 est connectée au connecteur de sortie 15.1 via le transformateur 22 et un deuxième état dans lequel le connecteur d'entrée 14.2 est connecté au connecteur de sortie 15.1 via le transformateur 21.

Un interrupteur 25 est également disposé entre la source de signal d'intégrité de ligne 21 et l'alimentation électrique 26 de celle-ci.

Un organe de commande 27, comme un bouton rotatif à trois positions, est relié au commutateur 24 et à l'interrupteur 25 pour commander ceux-ci.

L'organe de commande 27 possède trois états sélectivement activables, à savoir :
- un état de blocage de la liaison dans lequel le commutateur 24 est dans son premier état et l'interrupteur 25 est ouvert de sorte que le connecteur d'entrée 14.2 est déconnecté du connecteur de sortie 15.1 et que, la source de signal d'intégrité de ligne 21 n'étant pas alimentée, le signal d'intégrité de ligne n'est pas transmis au connecteur de sortie 15.1 et le transceiver 5.1 ne peut fonctionner.
- un état de liaison unidirectionnelle dans lequel le commutateur 22 est dans sa première position et l'interrupteur 23 est fermé de sorte que le connecteur d'entrée 14.2 est déconnecté du connecteur de sortie 15.1 et que la source de signal d'intégrité de ligne 21 est alimentée et transmet le signal d'intégrité de ligne au connecteur de sortie 15.1. Seule la liaison de l'ordinateur 2.1 vers l'ordinateur 2.2 est alors possible.
- un état de liaison bidirectionnelle dans lequel le commutateur 22 est dans son deuxième état de sorte que le connecteur d'entrée 14.2 est connecté au connecteur de sortie 15.1 permettant ainsi la transmission de messages de l'ordinateur 2.1 vers l'ordinateur 2.2 et la transmission de messages de l'ordinateur 2.2 vers l'ordinateur 2.1.

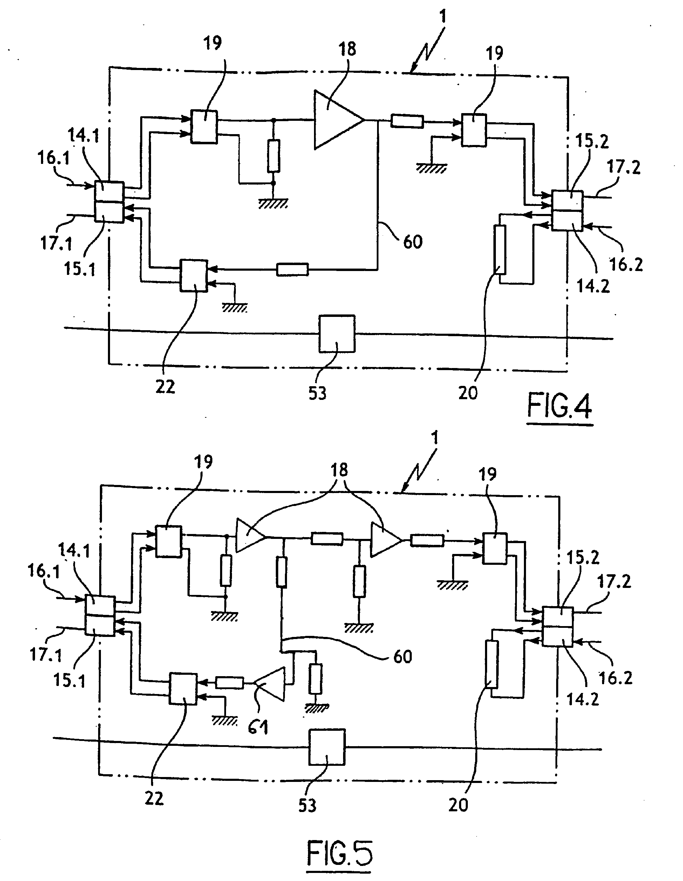

Dans une deuxième variante représentée à la figure 4, l'organe d'émission du signal d'intégrité de ligne comprend une dérivation 60 qui s'étend entre la sortie de l'amplificateur analogique 18 et le transformateur d'isolement 22.

Ainsi, le signal d'intégrité de ligne et les messages émis depuis les bornes de transmission externe du transceiver 5.1 sont transmis à la fois aux bornes de réception externe du transceiver 5.2 mais également aux bornes de réception externe du transceiver 5.1 via la dérivation 60. Les messages qui ne sont pas destinés à l'ordinateur 2.1 ne seront pas pris en compte.

Dans cette variante, il est en outre possible de vérifier de manière simple le fonctionnement de la chaîne de transmission de message entre l'ordinateur 2.1 et l'amplificateur analogique 18 en envoyant depuis l'ordinateur 2.1 un message adressé à l'ordinateur 2.1 qui lui reviendra par la dérivation 60.

Une troisième variante du dispositif de liaison 1 conforme au premier mode de réalisation est représentée à la figure 5.

La troisième variante est basée sur la deuxième variante décrite ci-dessus.

Dans cette troisième variante, deux amplificateurs 18 analogiques sont disposés en série entre les transformateurs d'isolement 19.

La dérivation 60 possède un point de raccordement entre les deux amplificateurs 18 et un point de raccordement au transformateur d'isolement 22 et comprend un amplificateur 61 analogique.

L'utilisation de deux amplificateurs 18 permet d'augmenter la fiabilité du dispositif de liaison. En effet, la seule possibilité pour qu'un message puisse transiter depuis l'ordinateur 2.2 vers l'ordinateur 2.1 serait qu'une première panne survienne sur l'amplificateur 18 voisin du connecteur 15.2 et laisse en court-circuit l'entrée et la sortie de cet amplificateur. Toutefois, si la première panne survenue, l'amplificateur 18 voisin du connecteur 14.1 continue à fonctionner, il impose son niveau de sortie et bloque tout signal qui remonterait par l'amplificateur en panne. Il faudrait donc que survienne une deuxième panne, sur l'amplificateur 18 voisin du connecteur 14.1, qui laisse ouverte la sortie de cet amplificateur.

La première panne a une probabilité d'apparition extrêmement faible si ce n'est nulle. La probabilité d'apparition simultanée des deux pannes est encore plus faible.

On notera sur les figures la présence de résistances qui sont utilisées de façon connue en elle-même pour réaliser une adaptation d'impédance en compensant les gains des amplificateurs (chaque amplificateur a ici un gain de deux).

Un deuxième mode de réalisation du dispositif de liaison 1 va maintenant être décrit. Seules les références des éléments internes du dispositif de liaison 1 sont modifiées (les références des connecteurs d'entrée et de sortie 14.1, 14.2, 15.1, 15.2, et du filtre passe-bas 53 étant toutefois conservées).

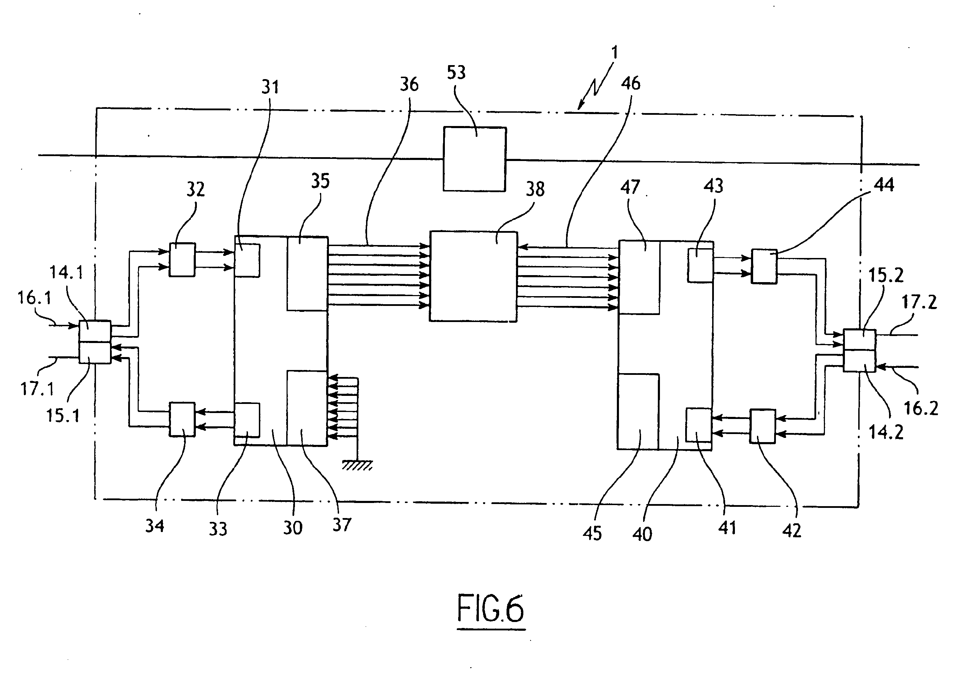

En référence à la figure 6, le dispositif de liaison 1 comprend, conformément au deuxième mode de réalisation de l'invention un transceiver 30 ayant des bornes de réception externe 31 reliées par un transformateur d'isolement 32 au connecteur d'entrée 14.1 et des bornes de transmission externe 33 reliées par un transformateur d'isolement 34 au connecteur de sortie 15.1. Le transceiver 30 comprend également des bornes de transmission interne 35 reliées par l'intermédiaire d'un bus xMII 36 à une mémoire tampon 38 et des bornes de réception interne 37 non connectées.

Le dispositif de liaison comprend un transceiver 40 comportant des bornes de réception externe 41 reliées par l'intermédiaire d'un transformateur d'isolement 42 au connecteur d'entrée 14.2 et des bornes de transmission externe 43 reliées par l'intermédiaire d'un transformateur d'isolement 44 au connecteur de sortie 14.2. Le transceiver 40 comporte également des bornes de transmission interne 45 non connectées et des bornes de réception interne 47 reliées par l'intermédiaire d'un bus xMII 46 à la mémoire tampon 38.

Le transceiver 30 émet par ses bornes de transmission externe 33 une porteuse vers le connecteur de sortie 15.1 et donc vers les bornes de réception externe 10.1 du transceiver 5.1.

La mémoire tampon 37 permet d'adapter le débit des bornes de transmission interne 35 du transceiver 30 aux bornes de réception interne 47 du transceiver 40 et permet en outre une répétition du message. Les bus xMII 36 et 46 sont par conception unidirectionnels et ne peuvent donc être utilisés pour faire passer un message de l'interface ETHERNET 3.2 vers l'interface ETHERNET 3.1.

Comme les bornes de transmission interne 45 du transceiver 40 ne sont pas raccordées aux bornes de réception interne 37 du transceiver 30, il n'existe pas de liaison entre le connecteur d'entrée 14.2 et le connecteur de sortie 15.1. Les bornes de transmission externe 9.2 du transceiver 5.2 de l'interface ETHERNET 3.2 sont donc déconnectées des bornes de réception externe 10.1 du transceiver 5.1 de l'interface ETHERNET 3.1 de sorte qu'aucun message ne peut passer de l'interface ETHERNET 3.2 vers l'interface ETHERNET 3.1.

En revanche, les bornes de transmission externe 33 du transceiver 30 sont reliées aux bornes de réception externe 10.1 du transceiver 5.1 de l'interface ETHERNET 3.1 et émettent vers celles-ci le signal d'intégrité de ligne.

Par ailleurs, l'ordinateur 2.1 comprend un port de réception 51 de signaux discrets et l'ordinateur 2.2 comprend un port d'émission 52 de signaux discrets.

Le dispositif de liaison 1 comprend un filtre passe-bas 53 relié au port d'émission 52 de l'ordinateur 2.2 et au port de réception 51 de l'ordinateur 2.1 pour laisser passer les signaux ayant une fréquence inférieure ou égale à un hertz. Ces signaux peuvent être utilisés pour tester la liaison unidirectionnelle et par exemple vérifier qu'un message envoyé par l'ordinateur 2.1 a bien été reçu par l'ordinateur 2.2. Le filtre passe-bas 53 empêche le passage de signaux évolués, qui auraient nécessairement une fréquence supérieure à un hertz, de sorte qu'il n'est pas possible à partir du deuxième ordinateur de contrôler ou engendrer des dysfonctionnements sur le premier ordinateur par cette liaison basse fréquence.

Bien entendu, l'invention n'est pas limitée aux modes de réalisation décrits et on peut y apporter des variantes de réalisation sans sortir du cadre de l'invention tel que défini par les revendications.

En particulier, le schéma du dispositif de liaison peut être différent de celui décrit. Par exemple, dans le premier mode de réalisation, le dispositif de liaison peut être dépourvu d'amplificateur analogique entre les connecteurs 14.1, 15.2 (le caractère irréversible de la liaison unidirectionnelle est alors assuré de manière moins fiable). En outre, dans les première et deuxième variantes, il est possible d'utiliser deux amplificateurs 18 au lieu d'un seul et, dans la troisième variante, il est possible d'utiliser un seul amplificateur 18 au lieu de deux. Plus de deux amplificateurs 18 peuvent être utilisés. Dans le deuxième mode de réalisation, des commutateurs peuvent être disposés entre le transformateur 42 et les bornes de réception externe 41 et entre le transformateur 34 et les bornes de transmission externe 33 pour permettre au choix soit l'établissement d'une liaison directe entre les connecteurs 14.2 et 15.1 pour la transmission de message de l'ordinateur 2.2 vers l'ordinateur 2.1, soit l'interruption de cette liaison (le transceiver 30 constituant alors la source de signal d'intégrité de ligne).

Bien que dans les modes de réalisation décrits, les interfaces ETHERNET sont associées à des ordinateurs, les interfaces ETHERNET peuvent être associées à tout équipement de réseau et notamment un routeur, un ordinateur, un pont, un commutateur ou autre.

Bien que l'invention ait été décrite plus particulièrement pour une application à une liaison 100 base TX, l'invention est également applicable à d'autres types de réseaux ETHERNET et notamment aux réseaux 10 mégabits, ou moyennant quelques modifications aux réseaux 1000 mégabits ou à fibres optiques.

## Revendications

1. Dispositif de liaison unidirectionnelle entre au moins une première interface ETHERNET et une deuxième interface ETHERNET (3.1, 3.2) qui comprennent respectivement un premier transmetteur-récepteur (5.1) et un deuxième transmetteur-récepteur (5.2) pourvus chacun de bornes de transmission externe de message (9.1, 9.2) et de bornes de réception externe de message (10.1, 10.2), **caractérisé en ce que** le dispositif comprend un organe de liaison (18 ; 30, 36, 37, 46, 40) des bornes de transmission externe du premier transmetteur-récepteur aux bornes de réception externe du deuxième transmetteur-récepteur et un organe d'émission (21 ; 30) d'un signal d'intégrité de ligne connecté aux bornes de réception externe du premier transmetteur-récepteur, les bornes de transmission externe du deuxième transmetteur-récepteur étant maintenues déconnectées des bornes de réception externe du premier transmetteur-récepteur.

2. Dispositif de liaison selon la revendication 1, **caractérisé en ce que** l'organe de liaison comprend au moins un amplificateur analogique (18) raccordé au premier transmetteur-récepteur (5.1) et au deuxième transmetteur-récepteur (5.2) pour amplifier le message provenant du premier transmetteur-récepteur en direction du deuxième transmetteur-récepteur.

3. Dispositif de liaison selon la revendication 2, **caractérisé en ce que** l'organe d'émission comprend une dérivation (60) raccordant une sortie de l'amplificateur analogique (18) aux bornes de réception externe (9.1) du premier transmetteur-récepteur (5.1).

4. Dispositif de liaison selon la revendication 3, **caractérisé en ce que** la dérivation (60) comprend au moins un amplificateur analogique (61).

5. Dispositif de liaison selon la revendication 2, **caractérisé en ce que** l'organe d'émission du signal d'intégrité de ligne comprend un transmetteur-récepteur (21) ayant des bornes de transmission externe reliées aux bornes de réception externe (10.1) du premier transmetteur-récepteur (5.1).

6. Dispositif de liaison selon la revendication 1, **caractérisé en ce qu'**il comprend un troisième transmetteur-récepteur (30) ayant des bornes de transmission externe (33) et des bornes de réception externe (31) respectivement reliées aux bornes de réception externe (10.1) et aux bornes de transmission externe (9.1) du premier transmetteur-récepteur (5.1), un quatrième transmetteur-récepteur (40) ayant des bornes de transmission externe (43) et des bornes de réception externe (41) respectivement reliées aux bornes de réception externe (10.2) et aux bornes de transmission externe (9.2) du deuxième transmetteur-récepteur (5.2), le troisième transmetteur-récepteur ayant des bornes de transmission interne (35) reliées à des bornes de réception interne (47) du quatrième transmetteur-récepteur par l'intermédiaire d'une mémoire tampon (38) et des bornes de réception interne (37) maintenues déconnectées des bornes de transmission interne (45) du quatrième transmetteur-récepteur.

7. Dispositif de liaison selon la revendication 1, **caractérisé en ce que** la première interface étant associée à un premier ordinateur (2.1) comprenant un port d'entrée (51) de signaux discrets et la deuxième interface étant associée à un deuxième ordinateur (2.2) comprenant un port de sortie (52) de signaux discrets, le dispositif comprend un organe de liaison raccordé à ces ports et pourvu d'un filtre passe-bas (53).

8. Dispositif de liaison selon la revendication 7, **caractérisé en ce que** le filtre passe-bas (53) est agencé pour laisser passer les signaux de fréquence inférieure à un hertz environ.

## Patentansprüche

1. Vorrichtung zur unidirektionalen Verbindung zwischen mindestens einer ersten ETHERNET-Schnittstelle und einer zweiten ETHERNET-Schnittstelle (3.1, 3.2), die jeweils einen ersten Transmitter-Empfänger (5.1) und einen zweiten Transmitter- Empfänger (5.2) umfassen, die jeweils mit Anschlüssen für die externe Nachrichtenübertragung (9.1, 9.2) und mit Anschlüssen für den externen Nachrichtenempfang (10.1, 10.2) versehen sind, **dadurch gekennzeichnet, dass** die Vorrichtung ein Verbindungsorgan (18; 30, 36, 37, 46, 40) zum Verbinden der Anschlüsse für die externe Übertragung des ersten Transmitter- Empfängers mit den Anschlüssen für den externen Empfang des zweiten Transmitter- Empfängers und ein Sendeorgan (21; 30) für das Senden eines Integritätssignals der Leitung umfasst, das mit den Anschlüssen für den externen Empfang des ersten Transmitter- Empfängers verbunden ist, wobei die Anschlüsse für die externe Übertragung des zweiten Transmitter- Empfängers in getrenntem Zustand von den Anschlüssen für den externen Empfang des ersten Transmitter- Empfängers gehalten werden.

2. Verbindungsvorrichtung nach Anspruch 1, **dadurch gekennzeichnet, dass** das Verbindungsorgan mindestens einen analogen Verstärker (18) umfasst, der an den ersten Transmitter- Empfänger (5.1) und an den zweiten Transmitter- Empfänger (5.2) angeschlossen ist zur Verstärkung der aus dem ersten Transmitter- Empfänger stammenden Nachricht in Richtung des zweiten Transmitter- Empfängers.

3. Verbindungsvorrichtung nach Anspruch 2, **dadurch gekennzeichnet, dass** das Sendeorgan eine Abzweigung (60) umfasst, die einen Ausgang des analogen Verstärkers (18) mit den Anschlüssen für den externen Empfang (9.1) des ersten Transmitter- Empfängers (5.1) verbindet.

4. Verbindungsvorrichtung nach Anspruch 3, **dadurch gekennzeichnet, dass** die Abzweigung (60) mindestens einen analogen Verstärker (61) umfasst.

5. Verbindungsvorrichtung nach Anspruch 2, **dadurch gekennzeichnet, dass** das Sendeorgan zum Senden des Integritätssignals der Leitung einen Transmitter- Empfänger (21) mit Anschlüssen zur externen Übertragung umfasst, die mit den Anschlüssen für den externen Empfang (10.1) des ersten Transmitter- Empfängers (5.1) verbunden sind.

6. Verbindungsvorrichtung nach Anspruch 1, **dadurch gekennzeichnet, dass** sie einen dritten Transmitter- Empfänger (30) mit Anschlüssen für die externe Übertragung (33) und Anschlüssen für den externen Empfang (31) umfasst, die jeweils mit den Anschlüssen für den externen Empfang (10.1) und den Anschlüssen für die externe Übertragung (9.1) des ersten Transmitter- Empfängers (5.1) verbunden sind, wobei ein vierter Transmitter- Empfänger (40) Anschlüsse für die externe Übertragung (43) und Anschlüsse für den externen Empfang (41) besitzt, die jeweils mit Anschlüssen für den externen Empfang (10.2) und Anschlüssen für die externe Übertragung (9.2) des zweiten Transmitter- Empfängers (5.2) verbunden sind, wobei der dritte Transmitter- Empfängers Anschlüsse für die interne Übertragung (35), die mit Anschlüssen für den internen Empfang (47) des vierten Transmitter- Empfängers mittels eines Pufferspeichers (38) verbunden sind, und Anschlüsse für den internen Empfang (37) besitzt, die in getrenntem Zustand von den Anschlüssen für die interne Übertragung (45) des vierten Transmitter- Empfängers gehalten werden.

7. Verbindungsvorrichtung nach Anspruch 1, **dadurch gekennzeichnet, dass** die erste Schnittstetlle mit einem ersten Computer (2.1) verbunden ist, der einen Eingangsport (51) für diskrete Signale umfasst, und dass die zweite Schnittstelle mit einem zweiten Computer (2.2) verbunden ist, der einen Ausgangsport (52) für diskrete Signale umfasst, und dass die Vorrichtung ein Verbindungsorgan umfasst, das an diese Ports angeschlossen und mit einem Tiefpassfilter (53) versehen ist.

8. Verbindungsvorrichtung nach Anspruch 7, **dadurch gekennzeichnet, dass** der Tiefpassfilter (53) so ausgebildet ist, dass er die Signale mit einer Frequenz von ungefähr weniger als einem Hertz passieren lässt.

## Claims

1. Unidirectional connecting device between at least one first ETHERNET interface and a second ETHERNET interface (3.1, 3.2) which respectively include a first transmitter-receiver (5.1) and a second transmitter-receiver (5.2) each provided with external message transmission terminals (9.1, 9.2) and external message reception terminals (10.1, 10.2), **characterized in that** the device includes a unit (18; 30, 36, 37, 46, 40) connecting the external transmission terminals of the first transmitter- receiver to the external reception terminals of the second transmitter-receiver and a unit (21; 30) for sending a line integrity signal connected to the external reception terminals of the first transmitter-receiver, the external transmission terminals of the second transmitter-emitter being maintained disconnected from the external reception terminals of the first transmitter-receiver.

2. Connecting device according to claim 1, **characterized in that** the connecting unit includes at least one analog amplifier (18) connected to the first transmitter-receiver (5.1) and the second transmitter-receiver (5.2) for amplifying the message from the first transmitter-emitter to the second transmitter-receiver.

3. Connecting device according to claim 2, **characterized in that** the transmission unit includes a branch (60) connecting an output of the analog amplifier (18) to the external reception terminals (9.1) of the first transmitter-receiver (5.1).

4. Connecting device according to claim 3, **characterized in that** the branch (60) includes at least one analog amplifier (61).

5. Connecting device according to claim 2, **characterized in that** the unit for sending the line integrity signal includes a transmitter-emitter (21) having external transmission terminals connected to the external reception terminals (10.1) of the first transmitter-receiver (5.1)

6. Connecting device according to claim 1, **characterized in** it includes a third transmitter-receiver (30) having external transmission terminals (33) and external reception terminals (31) respectively connected to the external reception terminals (10.1) and the external transmission terminals (9.1) of the first transmitter-receiver (5.1), a fourth transmitter-receiver (40) having external transmission terminals (43) and external reception terminals (41) respectively to the external reception terminals (10.2) and the external transmission terminals (9.2) of the second transmitter-receiver (5.2), the third transmitter-receiver having internal transmission terminals (35) connected to internal reception terminals (47) of the fourth transmitter-receiver via a buffer (38) and internal reception terminals (37) maintained disconnected from the internal transmission terminals (45) of the fourth transmitter-receiver.

7. Connecting device according to claim 1, **characterized in that**, the first interface being associated with a first computer (2.1) including a discrete signal input port (51) and the second interface being associated with a second computer (2.2) including a discrete signal output port (52), the device includes a connecting unit connected to these ports and provided with a low-pass filter (53).

8. Connecting device according to claim 7, **characterized in that** the low-pass filter (53) is adapted to pass signals at a frequency below approximately one hertz.
